# EUROPÄISCHE PATENTSCHRIFT

(11) **EP 2 753 478 B1**
(45) Veröffentlichungstag und Bekanntmachung des Hinweises auf die Patenterteilung: **01.02.2017**
(21) Anmeldenummer: 12742800.1
(22) Anmeldetag: 19.07.2012
(51) Int. Cl.: B60G 13/16, F16F 7/104

(54) **VORRICHTUNG ZUR REDUZIERUNG VON SCHWINGUNGEN AN EINER RADAUFHÄNGUNG**
DEVICE FOR REDUCING VIBRATIONS ON A WHEEL SUSPENSION
DISPOSITIF DE RÉDUCTION DES VIBRATIONS SUR UNE SUSPENSION DE ROUE

(30) Priorität: 07.09.2011 DE 102011112714
(43) Veröffentlichungstag der Anmeldung: 16.07.2014
(73) Patentinhaber: Audi AG, 85045 Ingolstadt (DE)
(72) Erfinder: ROTTER, Rene, 85055 Ingolstadt (DE); KOLM, Heiko, 85117 Eitensheim (DE); SAND, Michael, 86676 Ehekirchen (DE); MERKES, Wolfgang, 81929 München (DE)
(86) Internationale Anmeldenummer: PCT/EP2012/003053
(87) Internationale Veröffentlichungsnummer: WO 2013/034205

(56) Entgegenhaltungen:
- EP-A2- 1 078 783
- DE-A1-102007 057 723
- FR-A1- 2 535 259
- GB-A- 1 040 816
- JP-A- 2003 014 037

## Beschreibung

Die Erfindung betrifft eine Vorrichtung zur Reduzierung von Schwingungen an einer Radaufhängung, wobei ein an einem radseitigen Bauteil angebrachter Schwingungstilger vorgesehen ist, wobei eine Tilgermasse über eine nachgiebige Lagerung an einem radseitigen Bauteil gelagert ist.

DE 10 2007 057 723 A1 offenbart eine Vorrichtung zur Reduzierung von Schwingungen, wobei eine Tilger- und/oder Dämpfereinrichtung vorgesehen ist, die an einem radseitigen Bauteil angebracht ist. Die Resonanzfrequenz der Tilger- und/oder Dämpfereinrichtung ist dabei so gewählt , dass diese im Bereich der Resonanzfrequenz des Kraftfahrzeugaufbaus liegt. Die Tilger- und/oder Dämpfereinrichtung weist eine Tilger- und/oder Dämpfermasse zur Schwingungsreduzierung auf, wobei die Tilger- und/oder Dämpfermasse über eine nachgiebige Lagerung am radseitigen Bauteil gelagert ist. Dabei ist die Tilgereinrichtung ein Ringteil, das das Dämpfergehäuse des Stoßdämpfers umschließt. Die Tilgereinrichtung ist somit Bestandteil der Radaufhängung und muss auch bei deren Herstellung jeweils individuell für die verschiedenen Fahrzeugtypen angebracht werden. Dies ist auch im Hinblick auf eine eventuelle Nachrüstung eines Tilgers nachteilig.

DE 10 2004 010 804 A1 betrifft ein Federbein für ein Kraftfahrzeug mit einem ein Stossdämpfergehäuse aufweisenden Stossdämpfer, in welchem eine mit einem Federbeinlager verbundene Kolbenstange axial beweglich geführt ist, mit einer Feder, die sich einerseits an dem aufbauseitigen Federbeinlager und andererseits an dem Stossdämpfergehäuse abstützt, und mit einer Zusatzfeder, die am Federbeinlager angeordnet ist und beim Einfedern eine der Feder gleichgerichtete Kraft aufbaut. Der aus einem Elastomerwerkstoff hergestellten Zusatzfeder ist ein Ring zur Filterung von Anregungsfrequenzen zugeordnet.

DE 91 09 696 U1 offenbart eine Befestigungsvorrichtung eines Federbeines an einem Achsschenkel eines Kraftfahrzeugs, bei der ein unteres Federbeinende eine gabelförmige Aufnahme aufweist, die einen Haltesteg des Achsschenkel übergreift und durch Schrauben festsetzbar ist. Der Haltesteg weist Anlageflächen für die Aufnahme des Federbeines mit einer Oberflächenrauhigkeit auf

DE 199 15 635 A1 bezieht sich auf ein Schwingungssystem für die Dämpfung und/oder Tilgung der Schwingungen einer Kraftfahrzeugachse, wobei die Kraftfahrzeugachse mit dem Fahrzeugaufbau mechanisch verbindbar und an der Kraftfahrzeugachse mindestens ein Radträger vorgesehen ist, wobei der Radträger zur Lagerung bzw. Aufnahme eines drehbaren Kraftfahrzeugrades, bzw. einer Felge mit einem auf der Felge angeordnetem Reifen, ausgebildet ist und - im Fahrbetrieb - Schwingungen auf die Kraftfahrzeugachse einwirken und wobei für eine - erste - Dämpfung und/oder Tilgung der auf den Fahrzeugaufbau einwirkenden Schwingungen ein funktional zwischen dem Radträger und dem Fahrzeugaufbau wirkender erster Stossdämpfer, vorgesehen ist. Zur Dämpfung der radspezifischen Schwingungen des Kraftfahrzeugrades ein zusätzliches funktional mit dem Radträger direkt oder indirekt zusammenwirkendes, direkt am Radträger angeordnetes Tilgersystem vorgesehen ist.

DE 22 37 058 A1 offenbart einen als Radführungsglied dienenden dynamischen Stoßdämpfer für Fahrzeuge, insbesondere für Kraftfahrzeuge, bei dem eine in einem Tilgerrohr schwingende Tilgermasse gleichzeitig als hydraulischer Stossdämpferkolben ausgebildet ist und bei dem das Tilgerrohr einerseits an den ungefederten Massen befestigt ist und andererseits in einem mit den gefederten Massen verbundenen Führungsrohr gleitet. Das Tilgerrohr ist als Dämpferkolben für die niederfrequenten Schwingungen der abgefederten Masse ausgebildet. Das von dem Tilgerrohr in dem Führungsrohr eingeschlossene Volumen ist als Dämpfungszylinder mit einem Dämpfungsmedium gefüllt. Auch hier ist das Tilgerrohr ein integrierter Bestandteil der Dämpfungseinrichtung und muss für jeden Aufhängungstyp separat hergestellt und auch damit verbaut werden.

DE 102 54 632 A1 zeigt einen passiven Schwingungstilger für die Aufhängung eines Kraftfahrzeugrades, mit einem zwischen den beiden Anbindungen oder Radführungselementen eines Radträgers angeordneten Schwingungstilgungssystems unter Verwendung einer Tilgermasse, wobei zwischen Tilgermasse und Radträger eine Tilgerfeder angeordnet ist. Die Tilgermasse ist auf einem Dämpferrohr eines Schwingungsdämpfers gelagert und wird gleichzeitig über eine am Radträger oder an den Radführungselementen angeordnete Kolbenstange geführt. Da die Tilgermasse bei diesem Schwingungstilger auf dem Dämpfungsrahmen selbst montiert ist, muss ihre Ausgestaltung individuell auf die jeweiligen Stoßdämpfer abgestimmt werden, was einen entsprechend großen Bauaufwand bedeutet.

Gemäß JP H 11-230251 ist an einem Federbein einer Radaufhängung für Kraftfahrzeuge, bei der der Schwingungstilger an dem unteren Federteller einer um den Teleskop-Stoßdämpfer angeordneten, tragenden Schraubendruckfeder positioniert. Die ringförmige Tigermasse ist um die Peripherie des Federtellers herum unmittelbar an dem zwischen unterster Federwindung und dem Federteller vorgesehenen, elastischen Dämpfungsring angebunden. Alternativ ist der Schwingungstilger oberhalb des Federtellers und hufeisenförmig innerhalb der Tragfeder in einem umschließenden Blechgehäuse angeordnet. Beide Ausführungen sind weder baulich noch in ihrer Wirkung optimal an unterschiedliche Gegebenheiten bei Radaufhängungen anpassbar.

Aus der CN 101961975 A ist ein Radaufhängungssystem bekannt, bei dem eine Trägheitsmasse eingesetzt wird, um die Schwingungen des Automobilkörpers und die Schwingungen des Rades zu tilgen bzw. zu dämpfen. Die Einrichtung zur Tilgung der Kraftfahrzeugschwingungen und die Einrichtung zur Tilgung der Radschwingungen sind in Reihe geschaltet. Die beiden Tilgungseinrichtungen müssen bei dem Zusammenbau des Kraftfahrzeugs installiert werden und können daher weder nachgerüstet noch bestimmten Bedingungen angepasst werden.
GB 1,040,816 betrifft eine Federung für Fahrzeuge, insbesondere für Kraftfahrzeuge, bei der die Hauptfederung in Verbindung mit einem zu ihrer Dämpfung dienenden Relaxationsdämpfer, bestehend aus einem Dämpfer und einer mit diesem in Reihe geschalteten verhältnismäßig weichen Feder, mit einem Schwingungstilger, bestehend aus Feder, Dämpfer und einer Dämpfungsmasse, kombiniert ist. Bei der Federung ist der Dämpfer des Relaxationsdämpfers der Hauptfederung parallel und die Feder des Relaxationsdämpfers mit der Hauptfederung in Reihe geschaltet, wobei bei einem auf Dämpfung bei ca. 1 Hz abgestimmten Relaxationsdämpfer der Schwingungstilger auf Dämpfung bei ca. 10 Hz abgestimmt ist.
EP 1 078 783 A offenbart ein Federbein für ein Kraftfahrzeug mit einer Lagerung für eine Schraubenfeder mit einer von einem Stützelement aufgenommenen elastischen Federauflage, an der sich die Schraubenfeder abstützt, wobei die elastische Federauflage eine der Steigung der Feder entsprechend geneigt verlaufende Feder-Abstützfläche und eine im Abstützbereich der Feder gleiche Elastizität besitzt. Die Feder ist mit ihren freien Enden jeweils über eine im Stützelement gehaltene elastische Federauflage einerseits am Fahrzeugaufbau und andererseits am Dämpferrohr abgestützt, wobei die Stützelemente mit den korrespondierenden Federauflagen über Verdrillfixierungen miteinander in Eingriff stehen und die Federauflagen im Bereich dieser Fixierungen federnd ausgebildet sind.

FR 2 535 259 offenbart eine andere Vorrichtung zur Reduzierung von Schwingungen an einer Radaufhängung.

JP 2003 014037 A offenbart eine andere Vorrichtung zur Reduzierung von Schwingungen an einer Radaufhängung.

Dem gegenüber liegt der Erfindung die Aufgabe zugrunde, eine Vorrichtung mit einem Schwingungstilger an einem Körperschall-Übertragungspfad im Fahrwerk zur Bekämpfung des Phänomens der Übertragung von Reifentorusresonanz bereitzustellen, die einfach und kostengünstig realisiert werden kann und sich auch zur Nachrüstung eignet.

Die Aufgabe wird durch eine Vorrichtung mit den Merkmalen des Anspruchs 1 gelöst.

Die erfindungsgemäße Vorrichtung hat zunächst den Vorteil, dass die Anordnung des Schwingungstilgers an der Stoßdämpfergabel platzsparend ist und die Achsfunktionen beim Lenken und Federn nicht nachteilig beeinflusst. Der Schwingungstilger kann als Montageteil für den Zusammenbau von vorhandenen separaten Stoßdämpfergabeln zugeordnet werden, so dass die erfindungsgemäße Vorrichtung mit unterschiedlichen Gegebenheiten in dem jeweiligen Achsbaukasten abgestimmt werden kann und eine Nachrüstung bzw. Ausbesserung des Schwingungstilgers möglich ist. Schließlich ist eine Modifikation am Reifen oder an der Felge nicht erforderlich, um die erfindungsgemäße Vorrichtung zu verbauen.

Da der Schwingungstilger gegen Reifentorus-Resonanz auf einen Frequenzbereich von 150 Hz bis 300 Hz, vorzugsweise auf einen Frequenzbereich von 160 Hz bis 260 Hz, abgestimmt ist, ergibt sich der Vorteil, dass eine Abstimmung der Tilgermasse auf die Tilgerfrequenz unabhängig von der Abstimmung der Federung und der Dämpfung des Stoßdämpfers in einfacher Weise möglich ist. Mit anderen Worten kann aus einem Sortiment von Schwingungstilgermassen und entsprechenden Lagersockeln die geeignete Abstimmung ausgewählt werden, welche die jeweilige Resonanzfrequenz optimal getilgt.

Da die Tilgermasse des Schwingungstilgers zwischen 250 g und 1500 g liegt, kann die erfindungsgemäße Vorrichtung in vorteilhafter Weise optimal auf die jeweiligen Gegebenheiten abgestimmt werden, und die Tilgermassen können jeweils als Sortiment von 250 g bis 1500 g bevorratet werden.

Nach einer vorteilhaften Ausgestaltung der Erfindung ist die Tilger-Wirkrichtung auf die Wirkrichtung des Stoßdämpfers ausgerichtet. Durch Anbringung des Schwingungstilgers an der Stoßdämpfergabel wird auch sichergestellt, dass die Wirkrichtung des Schwingungstilgers vorteilhafterweise auf die Wirkrichtung des Stoßdämpfers ausgerichtet ist. Alternativ kann die Tilgerwirkrichtung aber auch in einer anderen Raumrichtung liegen.

Nach einer weiteren vorteilhaften Ausgestaltung der Erfindung ist die Tilgermasse an dem elastischen Trägersockel derart angeordnet, dass das Elastomer in Schubrichtung und/oder in Zug/Druckrichtung beansprucht wird, wobei auch hierdurch die Effizienz des Schwingungstilgers verbessert wird.

Nach einer weiteren vorteilhaften Ausgestaltung der Erfindung weist der Schwingungstilger eine Tilgermasse auf, die an einer Seite der Stoßdämpfergabel angeordnet ist. Damit kann in vorteilhafter Weise den Platzverhältnissen in der Radaufhängung Rechnung getragen werden, so dass auch dann, wenn auf beiden Seiten der Stoßdämpfergabel nicht genügend Platz für die erforderliche Tilgermasse vorhanden ist, eine wirksame Schwingungstilgung erzielt werden kann.

Nach einer weiteren vorteilhaften Ausgestaltung der Erfindung weist der Schwingungstilger zwei Tilgermassen auf, die jeweils an einer Seite der Stoßdämpfergabel angeordnet sind. Durch die symmetrische Anordnung der Tilgermassen auf beiden Seiten der Stoßdämpfergabel kann die Effizienz bei der Schwingungstilgung weiter erhöht werden.

Nach einer weiteren vorteilhaften Ausgestaltung der Erfindung ist der Schwingungstilger durch eine lösbare Verbindung, vorzugsweise durch Verschraubung oder eine Rastverbindung, mit der Stoßdämpfergabel verbunden. Alternativ kann der Schwingungstilger durch eine unlösbare Verbindung, vorzugsweise durch eine Niet-, Klebe- oder Schweißverbindung, mit der Stoßdämpfergabel verbunden sein, oder direkt an die Dämpferstelze anvulkanisiert sein. Dabei ist vorteilhaft, dass im Wesentlichen keine Einschränkungen bei der Art der Befestigung des Schwingungstilgers an der Stoßdämpfergabel gegeben sind.

Ausführungsbeispiele der Erfindung werden nun anhand der beiliegenden Zeichnungen beschrieben. Es zeigen:
Fig. 1 die hauptsächlichen Teile einer Radaufhängung mit einem erfindungsgemäßen Schwingungstilger;
Fig. 2 eine vergrößerte Darstellung der Stoßdämpfergabel mit dem erfindungsgemäßen Schwingungstilger an zwei exemplarischen Verbauorten;
Fig. 3 eine vergrößerte Darstellung der Stoßdämpfergabel mit dem erfindungsgemäßen Schwingungstilger nach Fig. 2 in einer anderen Seitenansicht;
Fig. 4 eine vergrößerte Seitenansicht der Stoßdämpfergabel mit dem erfindungsgemäßen Schwingungstilger nach Fig. 2 in einer anderen
Seitenansicht;
Fig. 5 eine vergrößerte Seitenansicht der Stoßdämpfergabel mit dem erfindungsgemäßen Schwinungstilger;
Fig. 6 einen Schnitt nach der Linie IV - IV durch die Stoßdämpfergabel nach Fig. 4, wobei nur die Tilgermassen vorne und hinten an der Stoßdämpfergabel gezeigt sind; und
Fig. 7 einen Schnitt nach der Linie V - V durch die Stoßdämpfergabel nach Fig. 5, wobei die Tilgermassen vorne und hinten und die Tilgermasse seitlich an der Stoßdämpfergabel gezeigt sind.

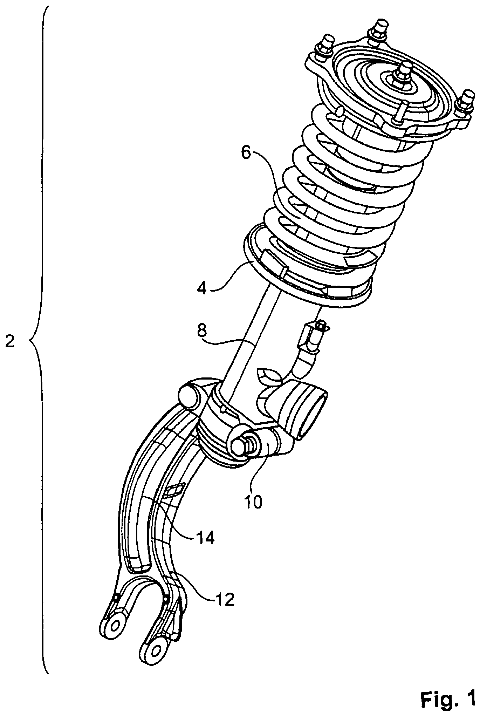

Fig. 1 zeigt im Wesentlichen Teile einer Radaufhängung 2, die einen Federteller 4, eine Dämpfungsfeder 6 und ein Dämpfungsbein 8 aufweist. An dem Dämpfungsbein 8 ist über eine Befestigungseinrichtung 10 eine Stoßdämpfergabel 12 befestigt, an der ein Schwingungstilger 14 befestigt ist. Alternativ kann die Stoßdämpfergabel auch in das Dämpfungsbein integriert sein, also einteilig ausgeführt sein.

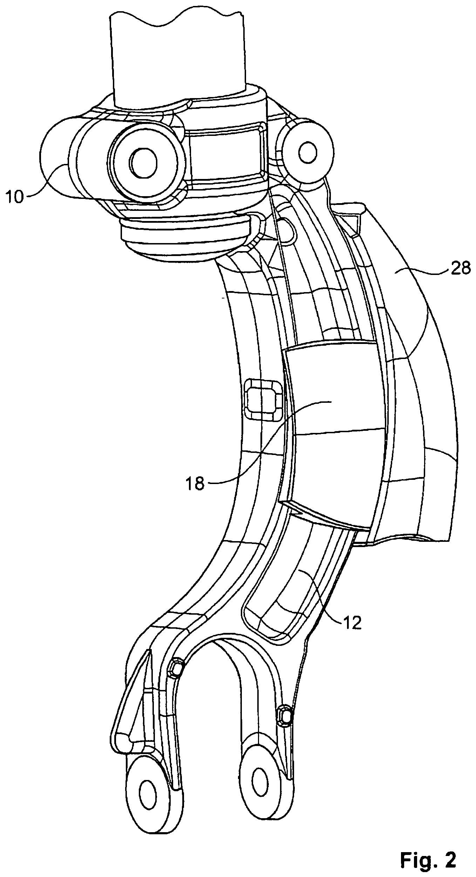

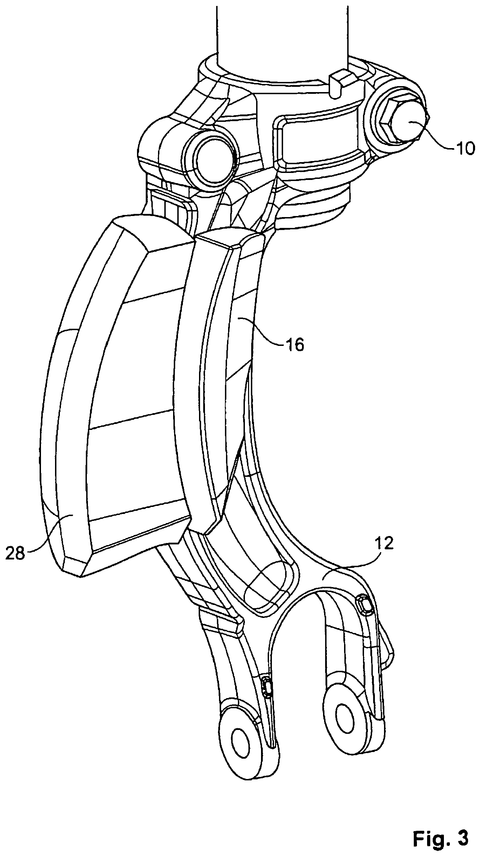

Die Fig. 2 und die Fig. 3 sind vergrößerte Seitenansichten der Stoßdämpfergabel 12 mit dem erfindungsgemäßen Schwingungstilger an exemplarischen Verbauorten. Fig. 2 zeigt die Stoßdämpfergabel 12 in Seitenansicht, wobei Tilgermassen 18 und 28 zu sehen sind. Fig. 3 zeigt die Stoßdämpfergabel 12 in einer anderen Seitenansicht, wobei eine Tilgermasse 16 und die Tilgermasse 28 zu sehen sind. Somit sind die beiden Tilgermasen 16 und 18 vorne und hinten an der Stoßdämpergabel 12 befestigt, während die Tilgermasse 28 seitlich an der Stoßdämpergabel 12 befestigt ist. Die Größe und der Verbauungsort der jeweiligen Tilgermasse 16, 18 oder 28 kann nach Bedarf dimensioniert bzw. gewählt werden, wobei die Ausgestaltung des Schwingungstilgers nicht auf die gezeigten Formen der Tilgermassen beschränkt ist. Obwohl in Fig. 3 drei Tilgermassen 16, 18, 28 auf drei Seiten der Stoßdämpfergabel 12 gezeigt sind, kann es auch ausreichend sein, dass der Schwingungstilger 14 nur eine Tilgermasse, beispielsweise die Masse 16 aufweist, die an einer Seite der Stoßdämpfergabel 12 angeordnet ist.

Gemäß Fig. 3 sind die Tilgermassen 16, 18, 28 über Schrauben 24, 26, 30 an der Stoßdämpfergabel 12 befestigt. Alternativ können jedoch auch eine Rastverbindung oder dergleichen verwendet werden, wenn die Verbindung zwischen dem Schwingungstilger 14 und der Stoßdämpfergabel 12 lösbar sein soll. Statt der Schrauben 24, 26 können auch (nicht gezeigt) Nieten-, Klebe- oder Schweißverbindungen verwendet werden oder direkt anvulkanisiert sein, um den Schwingungstilger 14 an der Stoßdämpfergabel 12 zu befestigen.

Da die Stoßdämpfergabel 12 gemäß Fig. 1 im Wesentlichen in derselben Richtung sich erstreckt wie das Stoßdämpferbein 8, ist die Tilgerwirkrichtung vorzugsweise auf die Wirkrichtung des Stoßdämpfers 2 ausgerichtet, wobei die Elastomerspur in Schubrichtung, d.h. in einer Richtung parallel zu den Grenzflächen zwischen Träger bzw. Stoßdämpfergabel und Trägersockel und Tilgermasse, beansprucht wird. Alternativ kann die Tilgerwirkrichtung aber auch in Zug-/Druckrichtung ausgerichtet sein, wobei die Elastomerspur in Zug-/Druckrichtung, d.h. in einer Richtung senkrecht zu den Grenzflächen zwischen Träger bzw. Stoßdämpfergabel und Trägersockel und Tilgermasse, beansprucht wird.

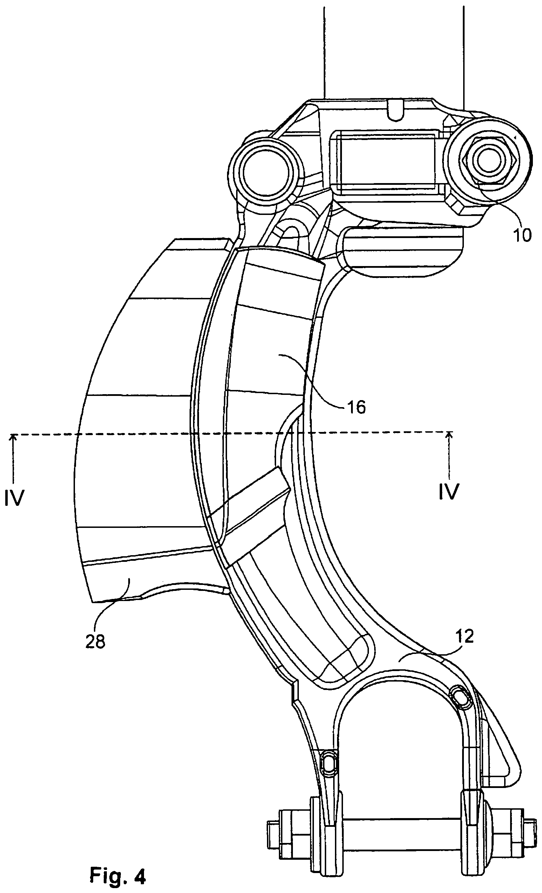

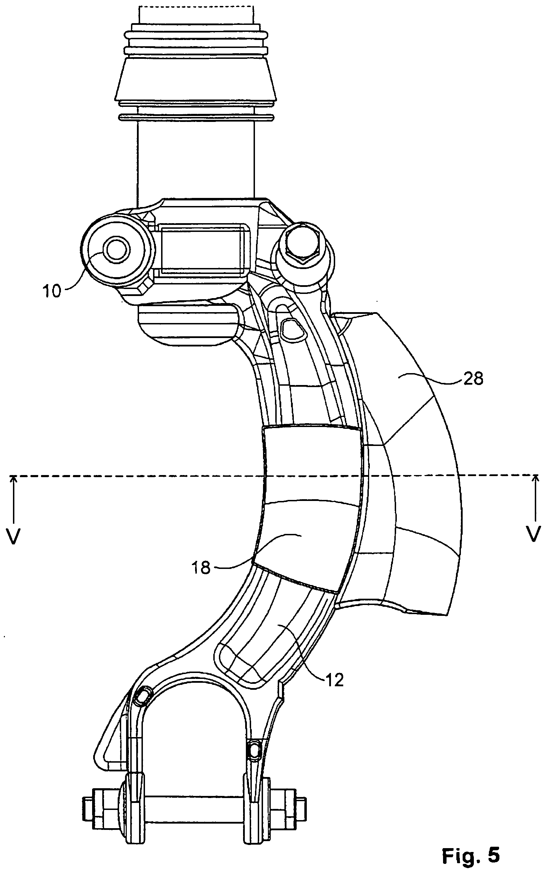

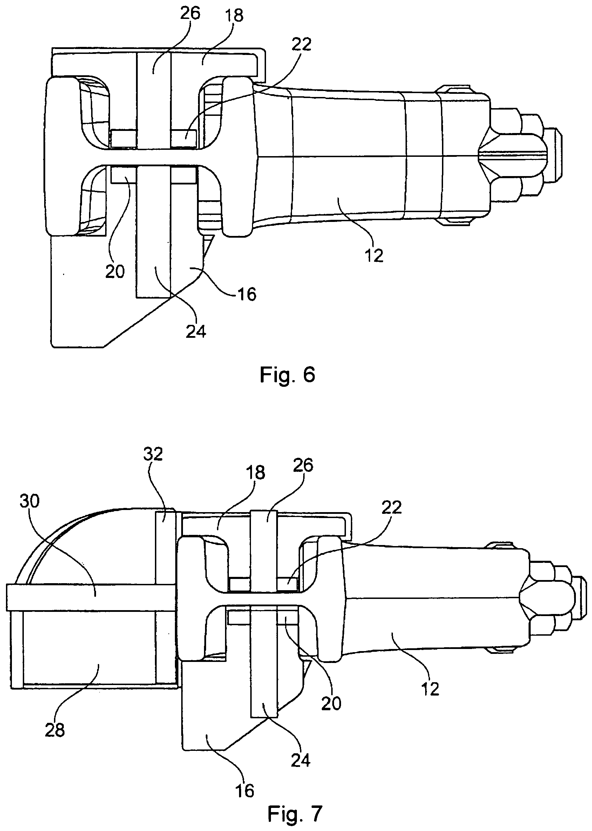

Die Figuren 4 und 5 zeigen vergrößerte Darstellungen der Stoßdämpfergabel mit dem erfindungsgemäßen Schwingungstilger nach Fig. 2 in anderen Seitenansicht Seitenansichten, wobei Schnittlinien eingezeichnet sind, die Grundlage für die Figuren 6 und 7 sind.

Fig. 6 zeigt einen Schnitt entlang der Linie IV - IV von Fig. 4, wobei nur die Tilgermassen vorne und hinten an der Stoßdämpfergabel 12 gezeigt sind. Die Stoßdämpfergabel 12 hat dabei einen Doppel-T-Querschnitt, wobei auf einer Seite der Stoßdämpfergabel 12 die Tilgermasse 16 und auf der anderen Seite der Stoßdämpfergabel 12 die Tilgermasse 18 angeordnet ist. Die Tilgermassen 16, 18 sind jeweils über Trägersockel 20, 22 aus einem elastomeren Material an der Stoßdämpfergabel 12 angeordnet.

Fig. 7 zeigt einen Schnitt nach der Linie V - V durch die Stoßdämpfergabel nach Fig. 5, wobei die Tilgermassen 16, 18 vorne und hinten und die Tilgermasse 28 seitlich an der Stoßdämpfergabel 12 gezeigt sind. Die Tilgermasse 28 ist auf einem elastomeren Trägersockel 32 durch eine Schraube 30 befestigt.

### Bezugszeichenliste

- 2: Stoßdämpfer
- 4: Federteller
- 6: Feder
- 8: Dämpferbein
- 10: Befestigungsvorrichtung
- 12: Stoßdämpfergabel
- 14: Schwingungstilger
- 16: Tilgermasse
- 18: Tilgermasse
- 20: Trägersockel
- 22: Trägersockel
- 24: Schraube
- 26: Schraube
- 28: Tilgermasse
- 30: Schraube
- 32: Trägersockel

## Patentansprüche

1. Vorrichtung zur Reduzierung von Schwingungen an einer Radaufhängung, wobei ein an einem radseitigen Bauteil angebrachter Schwingungstilger (14) vorgesehen ist, wobei eine Tilgermasse (16, 18, 28) über eine nachgiebige Lagerung an dem radseitigen Bauteil gelagert ist,
**dadurch gekennzeichnet, dass**
die Radaufhängung einen Stoßdämpfer (2) mit integrierter, also einteiligen, oder angesetzter Stoßdämpfergabel (12) aufweist,
dass die Tilgermasse (16, 18, 28) über einen die nachgiebige Lagerung bildenden Trägersockel (20, 22, 32) aus elastischem Material an der Stoßdämpfergabel (12) angeordnet ist,
dass der Schwingungstilger (14) gegen Reifentorusresonanz auf einen Frequenzbereich von 150 Hz bis 300 Hz, vorzugsweise auf einen Frequenzbereich von 160 Hz bis 260 Hz, abgestimmt ist, und dass
die Tilgermasse (16, 18) des Schwingungstilgers (14) zwischen 250 g und 1500 g beträgt.

2. Vorrichtung nach Anspruch 1, **dadurch gekennzeichnet, dass** das elastische Material des Trägersockels (20, 22, 32) ein Elastomer aufweist

3. Vorrichtung nach Anspruch 1 oder 2, **dadurch gekennzeichnet, dass** die Tilger-Wirkrichtung auf die Wirkrichtung des Stoßdämpfers (2) ausgerichtet ist.

4. Vorrichtung nach Anspruch 2 oder 3, **dadurch gekennzeichnet, dass** die Tilgermasse (16, 18, 28) an dem elastischen Trägersockel (20, 22, 32) derart angeordnet ist, dass das Elastomer in Schubrichtung und/oder in Zug/Druckrichtung beansprucht wird.

5. Vorrichtung nach Anspruch 1, **dadurch gekennzeichnet, dass** der Schwingungstilger (14) eine Tilgermasse (16, 18, 28) aufweist, die an einer vorderen oder hinteren Seite der Stoßdämpfergabel (12) angeordnet ist.

6. Vorrichtung nach Anspruch 1, **dadurch gekennzeichnet, dass** der Schwingungstilger (14) zwei Tilgermassen (16, 18, 28) umfasst, die jeweils an einer vorderen und einer hinteren Seite der Stoßdämpfergabel (12) angeordnet sind.

7. Vorrichtung nach Anspruch 1, **dadurch gekennzeichnet, dass** der Schwingungstilger (14) drei Tilgermassen (16, 18, 28) umfasst, die jeweils an einer vorderen und einer hinteren Seite der Stoßdämpfergabel (12) sowie seitlich dazu angeordnet sind.

8. Vorrichtung nach Anspruch 1, **dadurch gekennzeichnet, dass** der Schwingungstilger (14) durch eine lösbare Verbindung mit der Stoßdämpfergabel (12) verbunden ist.

9. Vorrichtung nach Anspruch 1, **dadurch gekennzeichnet, dass** der Schwingungstilger (14) durch eine unlösbare Verbindung mit der Stoßdämpfergabel (12) verbunden oder direkt an die Stoßdämpfergabel (12) anvulkanisiert ist.

## Claims

1. Device for reducing vibrations on a wheel suspension, wherein a vibration absorber (14) is provided which is fitted to a wheel-side component, wherein an absorption mass (16, 18, 28) is supported by means of a flexible support on the wheel-side component,
**characterised in that**
the wheel suspension comprises a shock absorber (2) having an integrated, that is to say, single-piece, or fitted shock absorber fork (12),
**in that** the absorption mass (16, 18, 28) is arranged on the shock absorber fork (12) by means of a carrier base (20, 22, 32) which is produced from resilient material and which forms the flexible support,
**in that** the vibration absorber (14) is adapted with respect to tyre torus resonance to a frequency range of from 150 Hz to 300 Hz, preferably a frequency range of from 160 Hz to 260 Hz, and **in that**
the absorption mass (16,18) of the vibration absorber (14) is between 250 g and 1500 g.

2. Device according to claim 1, **characterised in that** the resilient material of the carrier base (20, 22, 32) comprises an elastomer.

3. Device according to claim 1 or 2, **characterised in that** the active absorber direction is orientated towards the active direction of the shock absorber (2).

4. Device according to claim 2 or 3, **characterised in that** the absorption mass (16, 18, 28) is arranged on the resilient carrier base (20, 22, 32) in such a manner that the elastomer is loaded in a pushing direction and/or in a pulling/pressing direction.

5. Device according to claim 1, **characterised in that** the vibration absorber (14) comprises an absorption mass (16, 18, 28) which is arranged at a front or rear side of the shock absorber fork (12).

6. Device according to claim 1, **characterised in that** the vibration absorber (14) comprises two absorption masses (16, 18, 28) which are each arranged at a front and a rear side of the shock absorber fork (12).

7. Device according to claim 1, **characterised in that** the vibration absorber (14) comprises three absorption masses (16, 18, 28) which are each arranged at a front and a rear side of the shock absorber fork (12) and laterally with respect thereto.

8. Device according to claim 1, **characterised in that** the vibration absorber (14) is connected to the shock absorber fork (12) by means of a releasable connection.

9. Device according to claim 1, **characterised in that** the vibration absorber (14) is connected to the shock absorber fork (12) by means of a non-releasable connection or is directly vulcanised onto the shock absorber fork (12).

## Revendications

1. Dispositif pour réduire des vibrations sur une suspension de roue, un amortisseur de vibrations (14) installé au niveau d'un composant côté roue étant prévu, une masse d'amortissement (16, 18, 28) étant logée au niveau du composant côté roue par l'intermédiaire d'un palier souple,
**caractérisé en ce que**
la suspension de roue présente un amortisseur de chocs (2) avec une fourche d'amortisseur de chocs (12) intégrée, donc d'une seule pièce, ou placée,
**en ce que** la masse d'amortissement (16, 18, 28) est disposée au niveau de la fourche d'amortisseur de chocs (12) par l'intermédiaire d'un socle porteur (20, 22, 32) formant le palier souple, composé d'un matériau élastique,
**en ce que** l'amortisseur de vibrations (14) est accordé, contre la résonance de tore de pneu, sur une plage de fréquences de 150 Hz à 300 Hz, de préférence sur une plage de fréquences de 160 Hz à 260 Hz, et **en ce que**
la masse d'amortissement (16, 18) de l'amortisseur de vibrations (14) est comprise entre 250 g et 1.500 g.

2. Dispositif selon la revendication 1, **caractérisé en ce que** le matériau élastique du socle porteur (20, 22, 32) présente un élastomère.

3. Dispositif selon la revendication 1 ou 2, **caractérisé en ce que** la direction d'action de l'amortisseur est alignée sur la direction d'action de l'amortisseur de chocs (2).

4. Dispositif selon la revendication 2 ou 3, **caractérisé en ce que** la masse d'amortissement (16, 18, 28) est disposée de telle manière au niveau du socle porteur (20, 22, 32) élastique que l'élastomère est sollicité dans la direction de poussée et/ou dans la direction de traction/pression.

5. Dispositif selon la revendication 1, **caractérisé en ce que** l'amortisseur de vibrations (14) présente une masse d'amortissement (16, 18, 28), qui est disposée au niveau d'un côté avant ou d'un côté arrière de la fourche d'amortisseur de chocs (12).

6. Dispositif selon la revendication 1, **caractérisé en ce que** l'amortisseur de vibrations (14) comprend deux masses d'amortissement (16, 18, 28), qui sont disposées respectivement au niveau d'un côté avant et d'un côté arrière de la fourche d'amortisseur de chocs (12).

7. Dispositif selon la revendication 1, **caractérisé en ce que** l'amortisseur de vibrations (14) comprend trois masses d'amortissement (16, 18, 28), qui sont disposées respectivement au niveau d'un côté avant et d'un côté arrière de la fourche d'amortisseur de chocs (12) ainsi que latéralement par rapport à celle-ci.

8. Dispositif selon la revendication 1, **caractérisé en ce que** l'amortisseur de vibrations (14) est relié, par une liaison amovible, à la fourche d'amortisseur de chocs (12).

9. Dispositif selon la revendication 1, **caractérisé en ce que** l'amortisseur de vibrations (14) est relié, par une liaison inamovible, à la fourche d'amortisseur de chocs (12) ou est mis en place par vulcanisation directement au niveau de la fourche d'amortisseur de chocs (12).
